# EUROPEAN PATENT SPECIFICATION

(11) **EP 2 076 664 B1**
(45) Date of publication and mention of the grant of the patent: **06.10.2010**
(21) Application number: 07809296.2
(22) Date of filing: 04.06.2007
(51) Int. Cl.: F02B 63/04

(54) **AUXILIARY POWER SYSTEM FOR A MOTOR VEHICLE**
HILFSANTRIEBSSYSTEM FÜR EIN KRAFTFAHRZEUG
SYSTÈME D'ÉNERGIE AUXILIAIRE POUR UN VÉHICULE À MOTEUR

(30) Priority: 21.06.2006 US 472120
(43) Date of publication of application: 08.07.2009
(73) Proprietor: The Gates Corporation, Denver, CO 80202 (US)
(72) Inventor: SERKH, Alexander, Troy, MI 48098-4696 (US); ALI, Imtiaz, Lathrup Village, MI 48076 (US)
(74) Representative: Tunstall, Christopher Stephen
(86) International application number: PCT/US2007/013114
(87) International publication number: WO 2007/149207

(56) References cited:
- US-A- 4 756 359
- US-A- 6 048 288
- US-A1- 2002 056 993
- US-A1- 2003 089 485
- US-B1- 7 013 646

## Description

### Field of the Invention

The invention relates to an auxiliary power system for a motor vehicle, namely, an auxiliary power system comprising an accessory belt drive system having a motive member for driving the accessory belt drive system, the motive member comprising an electric motor connectable to at least two alternate electric power sources.

### Background of the Invention

Almost two million long-haul trucks deliver various goods throughout the United States each year. The great majority of long haul trucks utilize some form of diesel engine. It is not uncommon for long-haul trucks to be driven 150,000 miles annually.

During trips as well as during loading and unloading operations truck engines are operated at idle for an average of 1900 hours. Idling large diesel engines is necessary to provide power needed to operate the truck equipment, power lights, appliances, communication gear, and air conditioning or heating for the cab and sleeping area when drivers are resting. Idling the engines for heavy trucks can cost about $2.50/hr in fuel, about $0.09/hr in preventative maintenance, and about $0.09/hr in overhaul costs at current fuel and maintenance rates.

While idling an engine provides the power needed to maintain a comfortable environment for the driver it has unwanted consequences. Operating a high horsepower diesel engine at low RPM under light load results in the incomplete combustion of fuel and gives off undesirable exhaust emissions. In addition, operating the diesel engine at low speed causes twice the wear of internal parts compared with the road speed RPM.

Auxiliary power units (APU's) are known which provide power while significantly reducing the need to idle the primary engine. The incentives for using APU's include reduced fuel use and engine wear, prolonged engine life and cuts in maintenance costs, and elimination of approximately 70%-90% of diesel emissions during long periods of engine idling.

Auxiliary power units are portable, truck mounted systems that can provide climate control and power for trucks without the need to operate the primary diesel engine at idle. Prior art systems generally consist of a small internal combustion engine (usually diesel) equipped with a variety of accessories.

The APU diesel engine uses the same coolant and coolant system as the primary diesel engine. During stops when the primary diesel is turned off the APU diesel circulates the coolant to the primary diesel to keep it warm during winter months for easy starts. The same coolant is also routed to the heater core inside the cabin to provide heat to the drive. The APU alternator can provide power for the interior lights, marker lights, and recharging the battery. An inverter can convert the alternator DC current to 110V AC power for televisions and microwaves. The APU air conditioner compressor uses the primary engine installed refrigerant, expansion valve, evaporator, and blower to provide chilled and dehumidified air to the cabin. The APU has its own condenser to reject the heat from the refrigerant.

As an example, APU's are known which comprise a two cylinder diesel engine driving a generator and an alternator. The generator provides power to a 110v HVAC system (separate from the factory installed air conditioning system) and electrical receptacles for microwaves, TVs, etc. The alternator is used to charge the batteries and run marker lights. In some instances, the small diesel engine drives a water pump that circulates coolant to the large diesel engine to keep it warm for starting during the winter months.

Another known APU comprises a small diesel engine which drives a generator. The generator provides power for electrically driven accessories such as the air conditioning compressor and the water pump. Since the accessories are driven by electrical motors and are powered by the APU, the primary diesel engine can be off. The speed of each accessory can be individually controlled and, therefore, provide only the conditioned air or such other power needed at that moment. The accessories are not forced to rotate at some fixed speed ratio of the engine speed.

Representative of the art is US patent no. 6,048,288 (2000) to Tsujii et al. which discloses an engine wherein auxiliary machines are operated by a motor generator where the engine is stopped to reduce electric power consumption.

Reference is made to copending U.S. non-provisional application no. 10/991,548 filed November 18, 2004.

What is needed is an auxiliary power system comprising an accessory belt drive system having a motive member for driving the accessory belt drive system, the motive member comprising an electric motor connectable to at least two alternate electric power sources. The present invention meets this need.

### Summary of the Invention

The primary aspect of the invention is to provide an auxiliary power system comprising an accessory belt drive system having a motive member for driving the accessory belt drive system, the motive member comprising an electric motor connectable to at least two alternate electric power sources.

Other aspects of the invention will be pointed out or made obvious by the following description of the invention and the accompanying drawings.

The invention comprises an auxiliary power system for a motor vehicle comprising a first engine having an accessory belt drive system comprising a belt and at least one driven pulley, the belt drivable by a driver pulley, the accessory belt drive system further comprising a motive member for driving the accessory belt drive system, the motive member comprises a motor engaged with the accessory belt drive system, a second engine operable to drive an electric power source, the electric power source electrically connected to the motive member, an alternate power source other than the electric power source connected to the motive member, a switch for selecting between the electric power source and the alternate power source, and the motive member drivable by the electric power source or the alternate power source in order to drive the accessory belt drive system when the first engine is not operating.

### Brief Description of the Drawings

The accompanying drawings, which are incorporated in and form a part of the specification, illustrate preferred embodiments of the present invention, and together with a description, serve to explain the principles of the invention.
Fig. 1 is a schematic view of the inventive system.
Fig. 2 is a chart of available power versus power needed by a truck.
Fig. 3 is an alternate embodiment of the inventive system.
Fig. 4 is an alternate embodiment of the inventive system.
Fig. 5 is an alternate embodiment of the inventive system.
Fig. 5A is a detail of the pulley arrangement for the embodiment in Fig. 5.
Fig. 6 is an alternate embodiment of the inventive system.
Fig. 6A is a detail of the pulley arrangement for the embodiment in Fig. 6.
Fig. 7 is an alternate embodiment of the embodiment in Fig. 6.
Fig. 8 is an alternate embodiment using a fuel cell.

### Detailed Description of the Preferred Embodiment

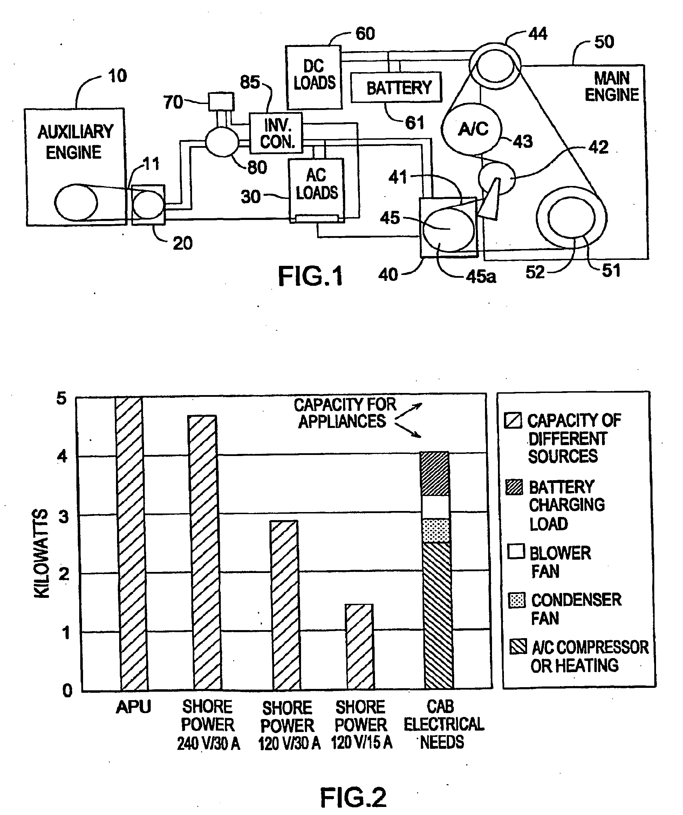

Fig. 1 is a schematic view of the inventive system. An auxiliary internal combustion (IC) engine 10 is used to propel an electric generator 20 such as an AC single phase or three phase generator or a DC generator. A belt 11 transmits the power from engine 10 to generator 20. Engine 10 may comprise either a diesel engine or gasoline engine or any other suitable engine known in the art. The electrical energy produced by generator 20 is used to power AC electrical loads 30 and an AC electric motor 40 via suitable known power management devices such as an inverter/controller unit 85. The power management device is used to convert power generated in one form and voltage level into other forms and voltage levels.

AC electric motor 40 is incorporated within the asynchronous belt drive system (ABDS) of a main engine 50. The main engine comprises any engine used on over the road tractor trailers rigs, or any other vehicle utilizing a large main diesel engine such as busses, freight trucks and the like.

The ABDS system is the belt driven system that is used to drive various engine and vehicle accessories. It can include various accessories such as an air conditioner compressor 43, alternator 44, AC motor pulley 45, and crankshaft pulley 51. A belt 41 trained among the accessories engages a pulley attached to each as is known in the art. A tensioner 42 known in the art is used to maintain proper tension in belt 41.

During periods when the main engine 50 is not operating but accessory systems are still needed, electric motor 40 becomes the prime mover for the ABDS. An electromagnetic clutch 52 (or in the alternative a one way clutch) is attached to the crankshaft 51, or power-take-off (PTO), of the main engine 50. Electromagnetic clutch 52 is known in the art, for example, Ogura Industrial Corp. model no. 515376.

Clutch 52 enables the AC electric motor 40 to drive the accessories without operating main engine 50 or turning the main engine crankshaft. Alternator 44 provides DC electrical power to recharge the batteries 61 and drive DC electrical loads 60 such as emergency flashers, marker lights, cab lights, radios, fans, and so on. Operation of the air conditioner (AC) compressor 43 makes it possible to deliver cool conditioned air to the truck's cab when the truck main engine is idle. A one way clutch 45a within pulley 45 disengages the motor 40 shaft when the main engine 50 is operating.

The inventive system is also capable of utilizing shore power 70 at highway rest facilities. Shore power 70 is electrical power (and may sometimes include internet, telephone, and cable connections) made available to vehicles at truck stops. A proposed standard for shore power (currently called the National Truck Stop Electrification Standard) is 240VAC at 30 amps (See Figure 2). However, the inventive system can also be configured to operate at 120 VAC and 208 VAC as well.

Figure 2 is a chart of available power versus power needed by a truck. The power generation capability of the inventive APU is shown as approximately 5 kW. The next three columns depict different amounts of shore power, namely 240VAC/30Amp, 120VAC/30Amp, 120VAC/15 Amp. Lastly, an example column is shown for cab electrical needs. As shown, these can include a battery charging load, blower, condenser, AC compressor or heating needs. The APU can be sized according to the electrical needs of the cab.

Referring to Fig. 1, if shore power 70 is available, there will be no need to operate engine'10. The power for the AC motor 40 is then provided through the electrical shore power connection 70. A switch 80 is used to select the source of power - either from generator 20 or shore power 70. Inverter/converter 85 in Fig. 1 accommodates the variety of shore power amounts and qualities, thereby allowing use of the full variety of shore power sources for the truck cab needs.

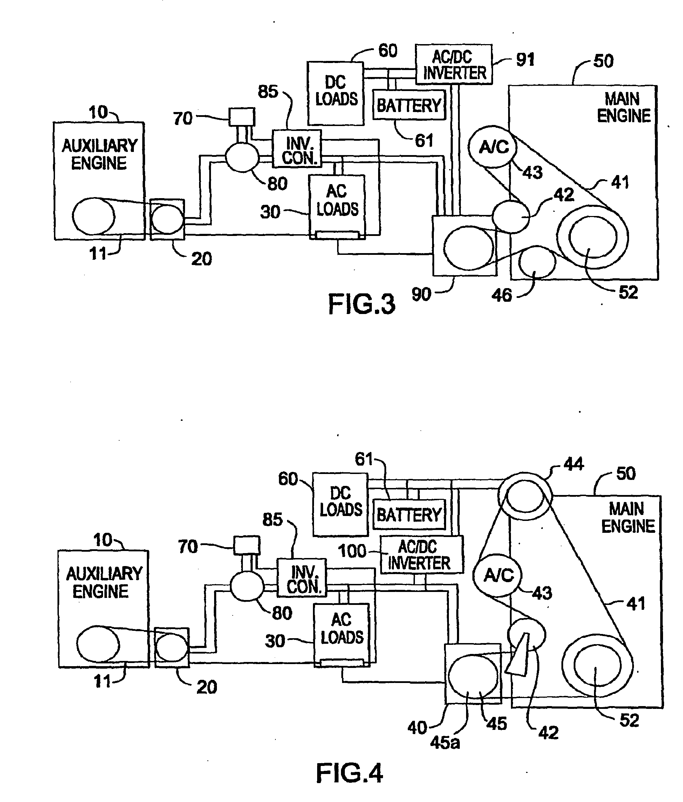

An alternate embodiment of the proposed invention in Fig. 1 is to remove alternator 44 and AC motor 40 and replace alternator 44 with an AC/DC inverter 91 and the AC motor 40 with a motor/generator 90 as depicted in Figure 3. Motor/generator 90 is capable of absorbing power, can operate as a motor, or operate as a generator for generating power. Motor/generator 90 is similar to the motor/generators used on mild hybrid vehicles, for example the Toyota Crown^{™} or PSA C3^{™}.

AC/DC inverter 91 converts AC power from the motor/generator 90 to DC power when the motor/generator 90 is in generator mode, and thereby providing power to DC loads 60 and battery 61.

When used in the motor mode to drive belt 41, motor/generator 90 is driven by either the shore power 70 or generator 20 via intervening power management device 85.

Within the main diesel engine belt drive sysytem, the placement of motor/generator 90 also determines the positions of the tensioner 42 and 46 as well as the desired belt tensions. The ability of motor/generator 90 to provide and absorb power requires use of at least two tensioners for the tensioning system, one on each side of the motor/generator 90 since depending upon the operating mode (motor or generator) the belt loads will be reversed.

Yet another alternate embodiment of the system described in Fig. 1 involves providing DC power, not from the alternator 44, but instead from the generator 20 via an AC/DC converter 100 as shown in Figure 4. Although alternator 44 remains in the main engine belt drive system it does not generate DC power. This is accomplished by removing the alternator rotor winding current. AC motor 40 is only used to propel AC compressor 43. Motor 40 is driven by either the shore power 70 or AC generator 20 via power management device 85 when motor 40 is used in the motor mode. The size and power requirements of AC motor 40 shown in Fig. 1 can be reduced in this alternate embodiment. For example, the rating of motor 40 in Fig. 1 is 20 Nm @ 3000 RPM and the rating in Fig. 4 is 10Nm @ 3000 RPM. As described in Fig. 1, a one way clutch 45a disengages the motor 40 shaft when the main engine 50 is running.

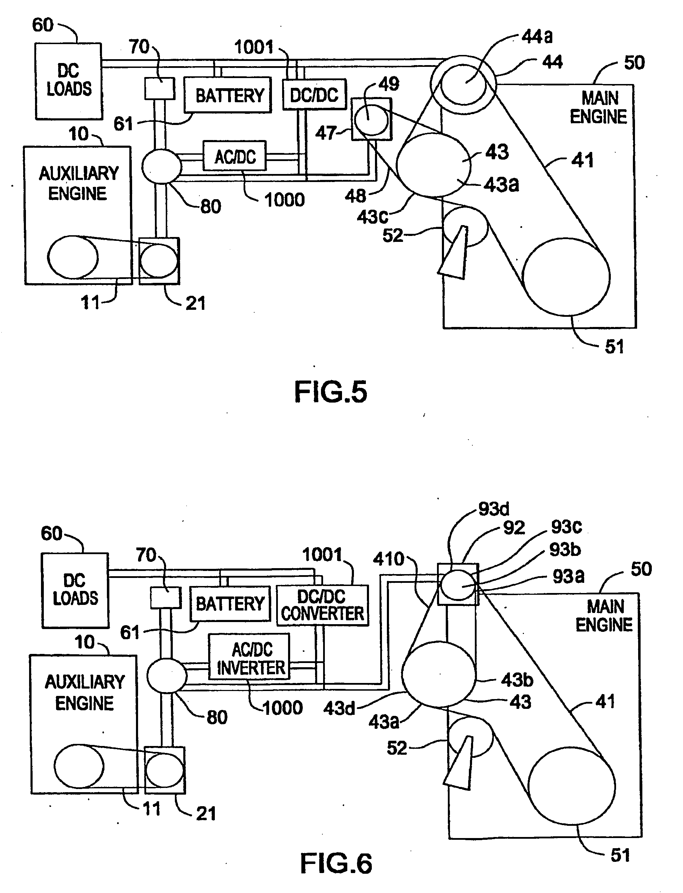

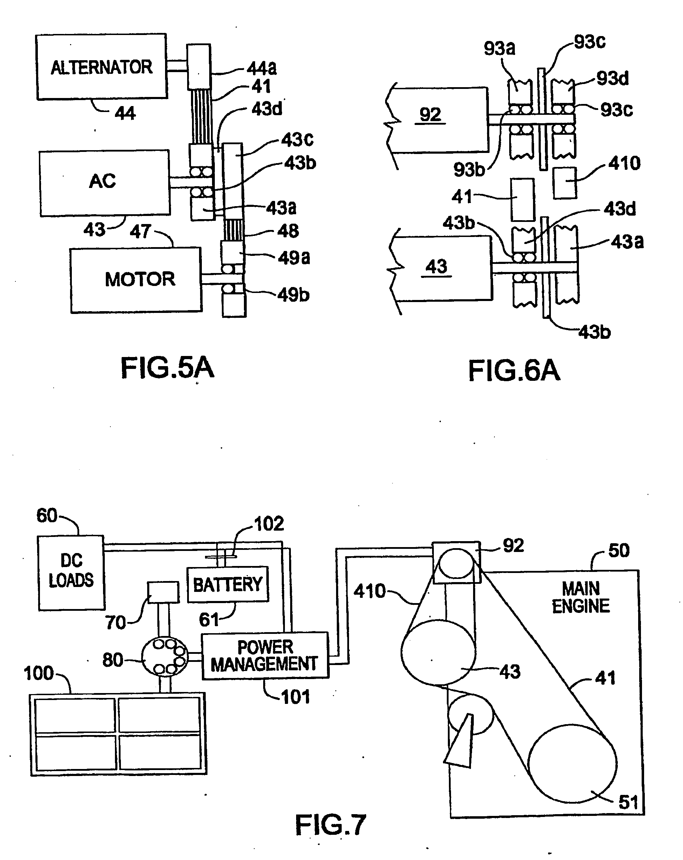

In yet another alternate embodiment, the inventive system involves providing DC power to DC loads 60 and for battery 61 charging when the main engine 50 is not operating. DC power is not obtained from the alternator 44, but from a DC generator 21 via switch 80 through a DC to DC converter 1001 as shown in Figure 5.

DC generator 21 may be of any appropriate capacity, however, the capacity selected for this embodiment is approximately 6kW.

Although alternator 44 is included in the belt drive system it will not generate DC power when engine 10 is operating and main engine 50 is not operating. Tensioner 52, known in the art, maintains proper operating tension in belt 41.

Power from DC generator 21 transmitted to DC motor 47 is used to propel AC compressor 43 through belt 48 when main engine 50 is not operating. If the power produced by generator 21 is sufficiently compatible that it can be consumed by DC motor 47, then no intervening power management devices are required. The generator and motor are electrically directly connected to each other. In this embodiment the speed of DC motor 47 will be relatively low, approximately 2000-3000 RPM.

Clutch 43b allows the AC compressor 43 to be disconnected from the main engine belt system when the main engine is not running.

When shore power 70 is available, switch 80 routes power to the AC/DC inverter 1000. DC output power from inverter 1000 drives DC motor 47, as well as provides energy for the battery 61 and the DC loads 60 through DC/DC converter 1001.

Fig. 5a is a detail of the pulley arrangement for the embodiment in Fig 5. Pulley 44a of alternator 44 will not rotate when engine 50 is not operating because the main engine belt 41 will not be propelled by the DC motor 47. DC motor 47 through one way clutch 49b and pulley 49a will propel belt 48 and thereby AC compressor 43 through pulley 43c, which is directly attached to the armature 43d of AC compressor 43. When engine 50 is not operating electromagnetic clutch 43b is disengaged to prevent belt 41 of the main engine belt drive system from rotating. For example, when AC compressor pressures are high, DC motor 47 will be shut off to simply stop rotating the AC compressor armature through pulley 43c to thereby relieve the excess pressure.

When main engine 50 is operating, belt 41 will propel .alternator 44 and AC compressor pulley 43a. When the AC compressor shaft is to be rotated, electromagnetic clutch 43b is engaged and thereby the electromagnetic clutch armature 43d which is attached to the AC compressor shaft will be engaged with and rotated with pulley 43a. Although pulley 43c will also rotate and propel belt 48 and pulley 49a, the DC motor 47 shaft will be disengaged and will not rotate because of the decoupling action of the one way clutch 49b.

Electromagnetic clutch 43b is known in the art, for example, an Ogura Industrial Corp. model 52184900.

Also, in this alternate embodiment no clutch is needed at crankshaft 51 of the main engine 50, which makes integration of the system to existing vehicles universal. Namely, any existing or new belt drive system layout is a suitable candidate for use of this system since the interconnection on the main engine 50 requires only installation of the DC motor 47, clutches/pulleys and belt 48 at the AC compressor 43.

Yet another alternate embodiment of the proposed system is shown in Fig. 6 which comprises omitting the alternator 44 from the system shown in Fig. 5. Alternator 44 is omitted and replaced by a high voltage motor/generator 92.

When main engine 50 is running, AC compressor 43 is driven by belt 41 through a pulley 43d attached to electromagnetic clutch 43b. AC compressor 43 rotates when electromagnetic clutch 43b is engaged. Electromagnetic clutch 93c is declutched when main engine 50 is running to prevent driving belt 410. However, when main engine 50 is operating motor/generator 92 is operated in generator mode to provide power for the battery and DC loads 60.

When engine 10 is running or shore power 70 is available and the main engine 50 is not running, the power coming from the AC/DC inverter 1000 (shore power connected) or the DC/DC converter 1001 (DC generator 21 operating) provides the energy for the DC motor/generator 92 which then functions as a motor to drive belt 410. Belt 410 is driven by pulley 93d. DC motor/generator 92 then propels the AC compressor 43 armature/shaft through engaged electromagnetic clutch 93c, through belt 410 and pulley 43a. One way clutch 93b will be over-running and belt 41 will not rotate. In this embodiment no one-way clutch as described in Fig. 1 is needed on the crankshaft 51.

Fig. 6A is a detail of the pulley arrangement on motor/generator 92 and AC compressor 43. Disposed on motor/generator 92 is pulley 93a and one-way clutch 93b on the belt 41 side, and pulley 93d and electromagnetic clutch 93c on the belt 410 side. Also disposed on AC compressor 43 is electromagnetic clutch 43b and pulley 43d on the belt 41 side, and pulley 43a on the belt 410 side directly connected to the armature of AC compressor 43. Electromagnetic clutches 93c and 43b are known in the art, including for example, Ogura Industrial Corp. model no. 522860.

When the main engine 50 is not operating motor generator 92 is operated as a motor, and electromagnetic clutch 93c is engaged, thereby driving belt 410. Belt 410 propels Ac compressor 43 through pulley 43a. One way clutch 93b prevents belt 41 from being driven.

When the main engine 50 is running, crankshaft 51 is the prime mover through belt 41. Crankshaft 51 propels the DC motor/generator 92 through belt 41, pulley 93a and one-way clutch 93b whereby DC motor/generator 92 functions as a generator. In this embodiment, motor/generator 92 can rotate at much higher speeds, for example approximately 11000 RPM, than the embodiment in Fig. 5 and must be designed for these conditions. In an alternate arrangement, the diameters of pulley 93a and 93d can be adjusted to limit speed.

Fig. 7 is an alternate embodiment of the embodiment in Fig. 6. The embodiment in Fig. 7 is as described for Fig. 6 with the following exceptions. In this embodiment, battery pack 100 is used in place of the engine 10 and DC generator 21. The batteries used in battery pack 100 are known in the art.

Battery pack 100 is used to supply power to the system when main engine 50 is not operating, i.e., to the DC loads 60 and DC motor/generator 92. Power from battery pack 100 is managed by the power management hardware/software 101 (known in the art) by which the system supplies energy at appropriate voltage levels to DC motor 92 which then propels AC compressor 43 as described elsewhere in this specification for Fig. 6. The power management hardware/software also provides energy to the DC loads 60 from the battery pack 100.

No battery 61 charging will take place while the system is bering operated with the battery pack 100. In this case battery 61 is electrically disconnected by switch 102. Battery pack 100 is recharged only when the main diesel engine 50 is operating. When engine 50 is operating switch 102 closes and DC motor/generator 92 operates as a generator to charge battery pack 100, provide energy to the DC loads 60, and recharge the main truck batteries 61.

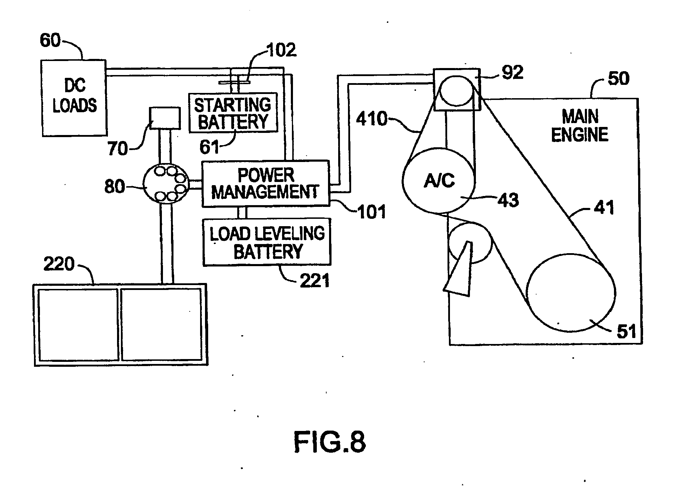

Yet another embodiment comprises use of a fuel cell in lieu of batteries. Fig. 8 is an alternate embodiment using a fuel cell. Fuel cells 220 are connected to switch 80. The APU system is otherwise described in Fig. 7.

There are several types of fuel cells available. These include but are not limited to phosphoric acid, alkali, and proton exchange membrane (PEM). An example of a PEM fuel cell is the Nextra^{™} fuel cell from Ballard Power Systems, Inc. For example, assuming a fuel cell power capacity of ~1.5kW, then two fuel cell units arranged in parallel will be required to supply enough power for the APU electrical and air conditioning requirements. Of course, any number of fuel cells may be included in the system depending upon the power requirements.

Fuel cells can operate with approximately 45% efficiency and can use either methanol or gaseous hydrogen as fuel. Because of the toxicity of methanol and water solubility, hydrogen is preferred. Hydrogen is plentiful and can be used directly by the fuel cell (no on board reforming is necessary For example, approximately 6.8Kg of compressed hydrogen is required to support the APU for five days assuming operating eight hours/ day.

The output voltage of the fuel cell is variable dependent on the current load. Open circuit output voltage can be approximately 42V while at full current draw the voltage can drop to approximately 25V. A power management system is required to condition the variable 25-42V output voltage level to an appropriate voltage and amperage useable by the electric motor driving the AC compressor and the 12 V DC loads.

In some instances, motor 92 at start up can have a high initial temporary current draw. If the fuel cell has to produce power sufficient to meet this temporary peak power demand, its power producing capability would have to be much greater, and hence the fuel cell unit would be larger and more expensive. By using a load leveling battery 221 during peak power draws for example during motor starts, the battery then temporarily augments the fuel cell power output. Load leveling battery 221 is connected to the power management unit 101. Use of the load leveling battery 221 in conjunction with the power management unit 101 enables the fuel cells 220 to be reasonably sized based upon a levelized load, for example 3 kW.

Although forms of the invention have been described herein, it will be obvious to those skilled in the art that variations may be made in the construction and relation of parts without departing from the scope of the invention as defined by the claims.

## Claims

1. An auxiliary power system for a motor vehicle comprising:
a first engine (50) having an accessory belt drive system comprising a belt (41) and at least one driven pulley (43), the belt driven by a driver pulley (51);
the accessory belt drive system further comprising a motive member other than the driver pulley (51) for driving the accessory belt drive system;
the motive member comprises a motor (40) engaged with the accessory belt drive system;
a second engine (10) operable to drive an electric power source (20), the electric power source (20) electrically connected to the motive member; **characterised by**:
an alternate power source (70) other than the electric power source connected to the motive member;
a switch (80) for selecting between the electric power source (20) and the alternate power source (70); and
the motive member drivable by the electric power source (20) or the alternate power source (70) in order to drive the accessory belt drive system when the first engine (50) is not operating.

2. The auxiliary power system for a motor vehicle as in claim 1, wherein an inverter/converter (85) is disposed between the electric power source (20) and the motive member (40).

3. The auxiliary power system for a motor vehicle as in claim 1, wherein an inverter/converter (85) is disposed between the alternate power source (70) and the motive member (40).

4. The auxiliary power system for a motor vehicle as in claim 1 wherein the motor further comprises a generator (90).

5. The auxiliary power system for a motor vehicle as in claim 1, wherein the driver pulley comprises a first one-way clutch (52).

6. The auxiliary power system for a motor vehicle as in claim 5, wherein the first one-way clutch (52) is electromagnetic.

7. The auxiliary power system for a motor vehicle as in claim 1, wherein the motor (40) comprises a DC motor.

8. The auxiliary power system for a motor vehicle as in claim 1, wherein the motor (40) comprises an AC motor.

9. The auxiliary power system for a motor vehicle as in claim 1 further comprising a power management device (85) disposed between the electric power source (20) and the motive member (40).

10. The auxiliary power system for a motor vehicle as in claim 7, wherein the power management device comprises an AC/DC to DC converter (100).

11. The auxiliary power system for a motor vehicle as in claim 1, wherein the alternate power source (70) is AC power.

12. The auxiliary power system for a motor vehicle as in claim 1, wherein the alternate power source comprises a battery (100).

13. The auxiliary power system for a motor vehicle as in claim 1, wherein the alternate power source comprises a fuel cell (220).

## Patentansprüche

1. Hilfsantriebssystem für ein Kraftfahrzeug, mit:
einem ersten Motor (50) mit einem Zusatz-Riemenantriebssystem, das einen Riemen (41) und mindestens eine angetriebene Riemenscheibe (43) aufweist, wobei der Riemen von einer Antriebs-Riemenscheibe (51) angetrieben ist;
wobei das Zusatz-Riemenantriebssystem ferner außer der Antriebs-Riemenscheibe (51) ein Antriebsteil zum Antreiben des Zusatz-Riemenantriebssystems aufweist;
wobei das Antriebsteil einen mit dem Zusatz-Riemenantriebssystem zusammengreifenden Motor (40) aufweist;
einem zweiten Motor (10), der zum Antreiben einer elektrischen Energiequelle (20) betätigbar ist, wobei die elektrische Energiequelle (20) elektrisch mit dem Antriebsteil verbunden ist;
**gekennzeichnet durch**:
eine alternative Energiequelle (70) außer der mit dem Antriebsteil verbundenen elektrischen Energiequelle;
einen Schalter (80) zum Wählen zwischen der elektrischen Energiequelle (20) und der alternativen Energiequelle (70); und
wobei das Antriebsteil **durch** die elektrische Energiequelle (20) oder die alternative Energiequelle (70) antreibbar ist, um das Zusatz-Riemenantriebssystem anzutreiben, wenn der erste Motor (50) nicht in Betrieb ist.

2. Hilfsantriebssystem für ein Kraftfahrzeug gemäß Anspruch 1, bei dem ein Inverter/Konverter (85) zwischen der elektrischen Energiequelle (20) und dem Antriebsteil (40) angeordnet ist.

3. Hilfsantriebssystem für ein Kraftfahrzeug gemäß Anspruch 1, bei dem ein Inverter/Konverter (85) zwischen der alternativen Energiequelle (70) und dem Antriebsteil (40) angeordnet ist.

4. Hilfsantriebssystem für ein Kraftfahrzeug gemäß Anspruch 1, bei dem der Motor ferner einen Generator (90) aufweist.

5. Hilfsantriebssystem für ein Kraftfahrzeug gemäß Anspruch 1, bei dem die Antriebs-Riemenscheibe eine erste Einwegkupplung (52) aufweist.

6. Hilfsantriebssystem für ein Kraftfahrzeug gemäß Anspruch 5, bei dem die erste Einwegkupplung (52) elektromagnetisch ist.

7. Hilfsantriebssystem für ein Kraftfahrzeug gemäß Anspruch 1, bei dem der Motor (40) einen Gleichstrommotor aufweist.

8. Hilfsantriebssystem für ein Kraftfahrzeug gemäß Anspruch 1, bei dem der Motor (40) einen Wechselstrommotor aufweist.

9. Hilfsantriebssystem für ein Kraftfahrzeug gemäß Anspruch 1, ferner mit einer Energieverwaltungsvorrichtung (85), die zwischen der elektrischen Energiequelle (20) und dem Antriebsteil (40) angeordnet ist.

10. Hilfsantriebssystem für ein Kraftfahrzeug gemäß Anspruch 7, bei dem die Energieverwaltungsvorrichtung einen AC/DC-Konverter (100) aufweist.

11. Hilfsantriebssystem für ein Kraftfahrzeug gemäß Anspruch 1, bei dem die alternative Energiequelle (70) Wechselstrom-Energie ist.

12. Hilfsantriebssystem für ein Kraftfahrzeug gemäß Anspruch 1, bei dem die alternative Energiequelle eine Batterie (100) aufweist.

13. Hilfsantriebssystem für ein Kraftfahrzeug gemäß Anspruch 1, bei dem die alternative Energiequelle eine Brennstoffzelle (220) aufweist.

## Revendications

1. Système d'énergie auxiliaire pour un véhicule à moteur, comprenant :
un premier moteur (50) comportant un système d'entraînement de courroie d'accessoires comprenant une courroie (41) et au moins une poulie entraînée (43), la courroie étant entraînée par une poulie d'entraînement (51) ;
le système d'entraînement de courroie d'accessoires comprenant de plus un élément moteur autre que la poulie d'entraînement (51) pour entraîner le système d'entraînement de courroie d'accessoires ;
l'élément moteur comprenant un moteur (40) venant en prise avec le système d'entraînement de courroie d'accessoires ;
un deuxième moteur (10) pouvant fonctionner pour entraîner une source d'énergie électrique (20), la source d'énergie électrique (20) étant électriquement connectée à l'élément moteur ; **caractérisé par** :
une autre source d'énergie (70), différente de la source d'énergie électrique connectée à l'élément moteur ;
un commutateur (80) pour effectuer une sélection entre la source d'énergie électrique (20) et l'autre source d'énergie (70) ; et
l'élément moteur pouvant être entraîné par la source d'énergie électrique (20) ou l'autre source d'énergie (70) de façon à entraîner le système d'entraînement de courroie d'accessoires lorsque le premier moteur (50) ne fonctionne pas.

2. Système d'énergie auxiliaire pour un véhicule à moteur selon la revendication 1, dans lequel un onduleur/convertisseur (85) est disposé entre la source d'énergie électrique (20) et l'élément moteur (40).

3. Système d'énergie auxiliaire pour un véhicule à moteur selon la revendication 1, dans lequel un onduleur/convertisseur (85) est disposé entre l'autre source d'énergie (70) et l'élément moteur (40).

4. Système d'énergie auxiliaire pour un véhicule à moteur selon la revendication 1, dans lequel le moteur comprend en outre un générateur (90).

5. Système d'énergie auxiliaire pour un véhicule à moteur selon la revendication 1, dans lequel la poulie d'entraînement comprend un premier embrayage unidirectionnel (52).

6. Système d'énergie auxiliaire pour un véhicule à moteur selon la revendication 5, dans lequel le premier embrayage unidirectionnel (52) est électromagnétique.

7. Système d'énergie auxiliaire pour un véhicule à moteur selon la revendication 1, dans lequel le moteur (40) comprend un moteur à courant continu.

8. Système d'énergie auxiliaire pour un véhicule à moteur selon la revendication 1, dans lequel le moteur (40) comprend un moteur à courant alternatif.

9. Système d'énergie auxiliaire pour un véhicule à moteur selon la revendication 1, comprenant de plus un dispositif de gestion d'énergie (85) disposé entre la source d'énergie électrique (20) et l'élément moteur (40).

10. Système d'énergie auxiliaire pour un véhicule à moteur selon la revendication 7, dans lequel le dispositif de gestion d'énergie comprend un convertisseur de courant alternatif/courant continu en courant continu (100).

11. Système d'énergie auxiliaire pour un véhicule à moteur selon la revendication 1, dans lequel l'autre source d'énergie (70) est une énergie électrique en courant alternatif.

12. Système d'énergie auxiliaire pour un véhicule à moteur selon la revendication 1, dans lequel l'autre source d'énergie comprend une batterie (100).

13. Système d'énergie auxiliaire pour un véhicule à moteur selon la revendication 1, dans lequel l'autre source d'énergie comprend une pile à combustible (220).
